# EUROPÄISCHE PATENTSCHRIFT

(11) **EP 1 837 107 B1**
(45) Veröffentlichungstag und Bekanntmachung des Hinweises auf die Patenterteilung: **13.07.2011**
(21) Anmeldenummer: 07003832.8
(22) Anmeldetag: 24.02.2007
(51) Int. Cl.: B23B 31/20

(54) **Monoblock-Spannzange als Kupplungselement für die HSK-Schnittstelle**
Monoblock collet as a coupling element for the HSK interface
Pince de serrage monobloc en tant qu'élément d'embrayage pour l'interface HSK

(30) Priorität: 25.03.2006 DE 102006011047
(43) Veröffentlichungstag der Anmeldung: 26.09.2007
(73) Patentinhaber: Narr Beteiligungs GmbH, 73230 Kirchheim/Teck (DE)
(72) Erfinder: Reinauer, Josef, 72514 Inzigkofen (DE)
(74) Vertreter: Kratzsch, Volkhard

(56) Entgegenhaltungen:
- EP-A- 0 263 982
- EP-A- 0 782 896
- US-A- 5 123 663

## Beschreibung

Die Erfindung betrifft eine Spannzange, die aus einem Stück besteht und deren Spannsegmente mit einem endseitigen Ring verbunden sind, dessen Federwirkung über Tellerfederelemente erzeugt wird, welche über Gelenke gelagert und über eine Zugstange radial ausgelenkt werden.

Eine derartige konstruktive Ausgestaltungsform ist aus der EP 0782896 B1 bekannt, bei der die Spanneinrichtung ein Sperrelement aufweist, deren Körper aus einer einstückigen Metallhülse besteht, die einen geschlossenen endseitigen Ring, einen daran anschließenden dünnwandigen Mantelabschnitt aufweist. Der dünnwandige Mantelabschnitt besteht aus Spannsegmenten, die stegbildende Durchbrüche besitzen und über deren Geometrie die notwendige Elastizität erzielt wird. Das Sperrelement dient als Zwischenstück zur Kraftübertragung, dessen Aufgabe es ist, die Kräfte ausgehend vom Gewindestift über die Zugstange auf den Hohlschaftkegel zu übertragen, wobei der Werkzeugträger mit der Spindel fest verspannt wird.

Der Erfindung liegt daher die Aufgabe zugrunde, eine Spannzange zur Spannkrafterzeugung der eingangs genannten Art aus einem Stück und in Lösestellung zu schaffen .

Diese Aufgabe wird dadurch gelöst, dass die Spannzange aus einem endseitigen Ring und einem daran anschließenden dünnwandigen Mantelabschnitt aus Spannsegmente besteht, die jeweils über Gelenke mit Tellerfederelementen federnd ausgebildet sind.

Die Spannzange besteht einstückig aus Spannsegmenten, Gelenken und Tellerfederelementen, die die Funktion einer Tellerfeder besitzen, über deren Kraft die Spannsegmente in die Lösestellung zurückschnappen. Die Tellerfederelemente bestehen aus dünnwandigen Mantelflächen, welche sich beim radialen Auslenken der Spannsegmente an ihren Befestigungsstegen abstützen und in Kammerrichtung ausgelenkt werden, wobei die Mantelflächen eine Wölbung erfahren, wodurch die Rückstellkraft am hinteren Teil der Spannzange und nicht wie bei gattungsähnlichen Spanneinrichtungen über zusätzliche Rückstellelemente, wie z. B. einer Wurmfeder, erzeugt wird.

Am hinteren Ende auf dem endseitigen Ring der Spannzange befinden sich Stege, die mit den Spannsegmenten aus einem Stück bestehen und jeweils im gleichen Winkel zueinander zentrisch mit einem Spannsegment ausgebildet sind. Die Stege sind zueinander mit einer dünnwandigen Mantelfläche verbunden, wobei sich zwischen den einzelnen Mantelflächen zwischen den Stegen und Spannsegmenten Kammern bilden, welche zum endseitigen Ring geöffnet sind.

Wird die Zugstange in axialer Richtung zur Werkzeugmaschinenspindel bewegt, erfolgt eine radiale Verstellung der Spannsegmente. Die Spannsegmente besitzen an ihrem äußeren Umfang einen Ringbund, dessen keilförmige Ringfläche an den Ausnehmungen am Werkzeugträger an dessen Greifschulter anliegen und diesen dann mit der Spindel bzw. einer Werkzeugmaschine mit einer werkzeugmaschinenseitig vorgesehenen Aufnahme fest verspannen.

Die Zugstange besitzt eine radiale Erhöhung, über welche die Spannzange bzw. die Spannsegmente radial in den Hohlschaft des Hohlschaftkegels ausgelenkt werden, bis sie in die Ausnehmungen am HSK drücken und diesen axial an das zu kuppelnde Gegenstück pressen.

Aufgabe der Erfindung ist es, eine Spannzange zu schaffen, die aus einem Monoblock besteht, d. h. aus einem Stück gefertigt wird, um dadurch eine absolute Rotationssymmetrie gewährleisten zu können. Gattungsähnliche Spannvorrichtungen bestehen aus einzelnen Spannsegmenten, die über gesonderte Fixier- und Befestigungselemente miteinander verbunden sind. Dies führt bei großen Drehzahlen zu ungewollten Schwingungen, was sich auf die Präzision, Lebensdauer sowie die Qualität der Bearbeitung negativ auswirkt.

Aufgabe der Erfindung ist es, eine Spannzange zu schaffen, die sich durch die monolithische Bauweise und der daraus folgenden ausgezeichneten Rotationssymmetrie mit der in Verbindung stehenden hohen Wuchtgüte bei großen Drehzahlen sowie durch wirtschaftliche Herstellbarkeit auszeichnet.

Die dünnwandigen Mantelflächen zwischen den Stegen am endseitigen Ring der Spannzange haben die Funktion einer Tellerfeder. Je nach Materialstärke der dünnwandigen Mantelflächen und der daraus resultierenden Kammergröße vergrößert oder verkleinert sich die Rückstellkraft, wobei jede Mantelfläche mit einem Gelenk ausgebildet ist, über welches die Auslenkung der einzelnen Spannsegmente vereinfacht wird.

Am hinteren Teil der Spannzange befinden sich die Befestigungsstege, deren Geometrie in Richtung zur x-Achse der Spannzange kleiner bzw. spitz zuläuft. Dadurch soll gewährleistet werden, dass die dünnwandige Materialfläche zwischen den Befestigungsstegen einen gleichen Querschnitt von oben nach unten besitzt. Durch die Kammern auf dem endseitigen Ring wird die Materialstärke am hinteren Teil der Spannzange verkleinert. Dadurch werden die Tellerfedereigenschaften an jedem einzelnen Spannelement erzeugt. Eine weitere Aufgabe der Erfindung ist es, eine Spannzange zu schaffen, deren Spannsegmente im gleichmäßigen Abstand zueinander und in der Grundstellung im Wesentlichen achsparallel zur x-Achse der Zugstange angeordnet sind, um zu gewährleisten, dass beim Entspannen die Spannsegmente automatisch in die Lösestellung zurückspringen und der Werkzeugträger von der Spindel gelöst bzw. ausgetauscht werden kann.

Der Erfindung liegt die Aufgabe zugrunde, eine Spannzange zu schaffen, die ohne feste Abstützung an einem aufnahmefesten Teil schwenkbar bzw. bedienbar ist, dessen innere Abstützung durch den Zugbolzen und die äußere Abstützung durch den Ring erfolgt.

Eine weitere Möglichkeit der Erfindung besteht darin, die entspannte Position der Spannzange derartig zu positionieren, dass beim Aufschieben des Hohlschaftkegels die Spannsegmente nach innen gedrückt werden, bis der Hohlschaftkegel mit dem zu kuppelnden Teil in Verbindung steht. Infolge der axialen Bewegung des Hohlschaftkegels in Richtung des zu kuppelnden Teils erfährt die Spannzange eine radiale Bewegung nach innen, wobei die Spannsegmente beim Anliegen des Hohlschafts an dem zu kuppelnden Teil durch dessen konstruktive Ausführungsform wieder in ihre Ausgangslage zurückspringen. Dadurch entsteht eine sogenannte Vorspannung, was bedeutet, dass sich die Spannsegmente der Spannzange in Mittestellung befinden zwischen den zu kuppelnden Teilen. Ein Loslösen eines der zu kuppelnden Teile kann hier verhindert werden, da beim Aufschieben des Hohlschaftkegels ein sogenannter Klickeffekt erfolgt. Ein Trennen der zu kuppelnden Teile erfolgt in gleicher Weise, wobei hier aber der Hohlschaftkegel axial gegen die Spannrichtung bewegt werden muss, bis die Spannsegmente den Hohlschaftkegel freigeben, was dann ebenfalls zu einem Klickeffekt führt.

Im Folgenden werden die Erfindung und deren Ausgestaltungen im Zusammenhang mit den Figuren näher erläutert.

Es zeigen:
Fig. 1 zeigt die Spannzange in einer dreidimensionalen Ansicht im gelösten Zustand,
Fig. 2 zeigt eine Darstellung der Spannzange und deren Gelenk im Schnitt im gelösten Zustand,
Fig. 3 zeigt die Spannzange in der Drauf- und Seitenansicht im gelösten Zustand,
Fig. 4 zeigt die Spannzange in der Drauf- und Seitenansicht im Schnitt,
Fig. 5 zeigt eine Darstellung der Spannzange und deren Gelenk im gespannten Zustand im Schnitt,
Fig. 6 zeigt die Spannzange in der Drauf- und Seitenansicht im gespannten Zustand,
Fig. 7 zeigt die Spannzange in einer dreidimensionalen Ansicht im gespannten Zustand,
Fig. 8 zeigt die Spannzange im gelösten Zustand in einer Kupplungsvorrichtung,
Fig. 9 zeigt die Spannzange im gespannten Zustand in einer Kupplungsvorrichtung.

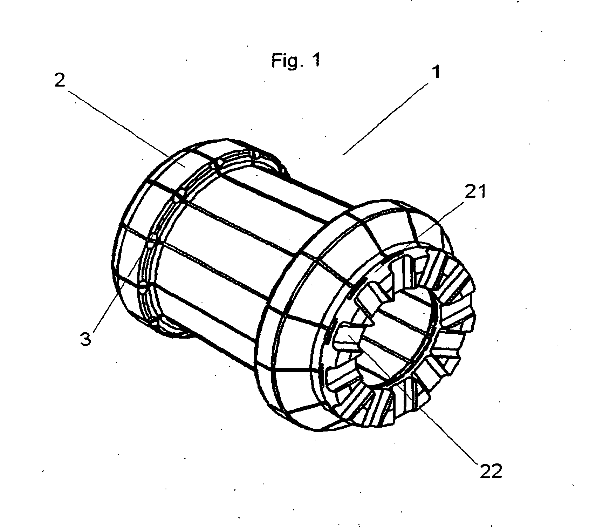

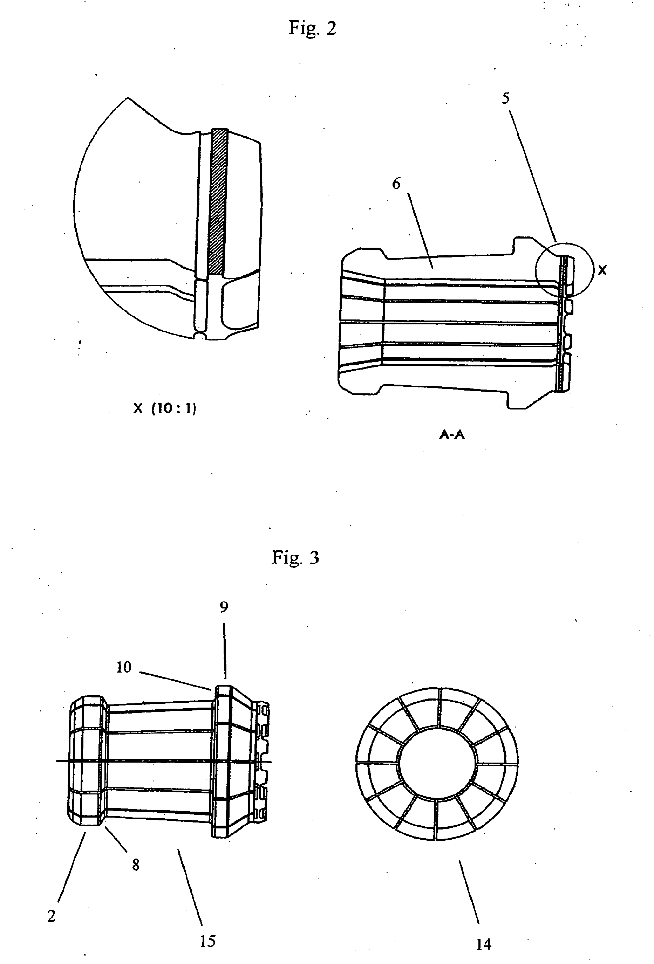

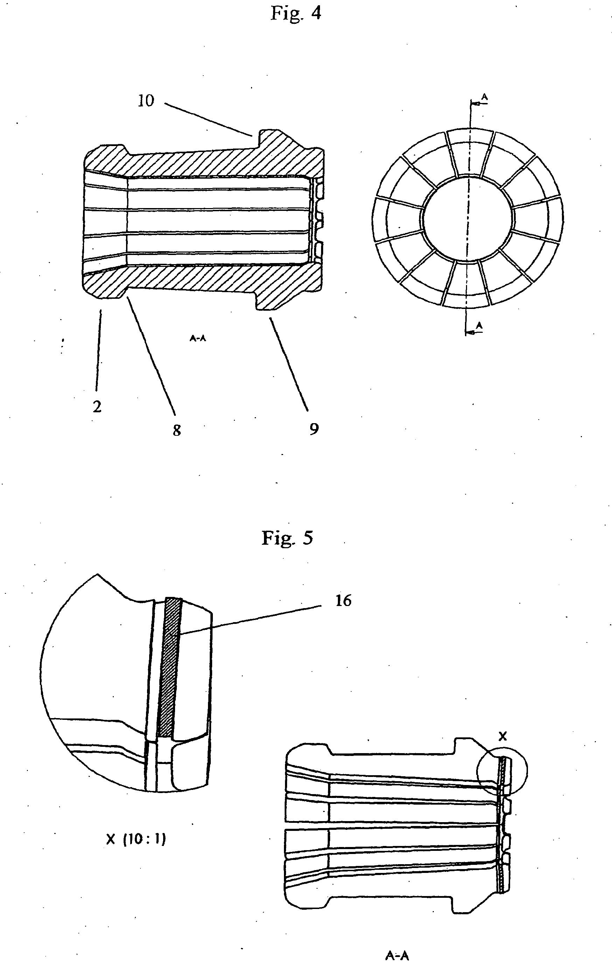

Fig. 1 bis 4 zeigt die Spannzange (1) im gelösten Zustand mit deren dazugehörigen Gelenken. Die Fig. 1 zeigt die Spannzange (1) in dreidimensionaler Ansicht, an deren vorderem Teilbereich am äußeren Umfang sich ein Ringbund (2) befindet, dessen keilförmige Ringfläche (3) an den Greifschultern (4) am Hohlschaftkegel eingreift. Die Fig. 2 zeigt in vergrößerter Darstellung ein Gelenk (5), welches sich im gelösten Zustand befindet. Das Gelenk (5) besitzt eine ballige Form, um ein materialschonendes Schwenken der Spannsegmente (6) nach innen und außen zu gewährleisten. Die Fig. 3 zeigt die Spannzange (1) in der Drauf- (14) und Seitenansicht (15), und in Fig. 4 sind diese im Schnitt dargestellt. Am vorderen Teilbereich befindet sich der Ringbund (2) mit seiner keilförmigen Ringfläche (3), und am hinteren Teil der Spannzange (1) befindet sich der Einhängebund (9), welcher in der Kupplungsvorrichtung (11) mit deren radialer Fläche (10) eine radiale Bewegung erfährt und in fester axialer Abstützung (12) auf das aufnahmefeste Teil (13) drückt.

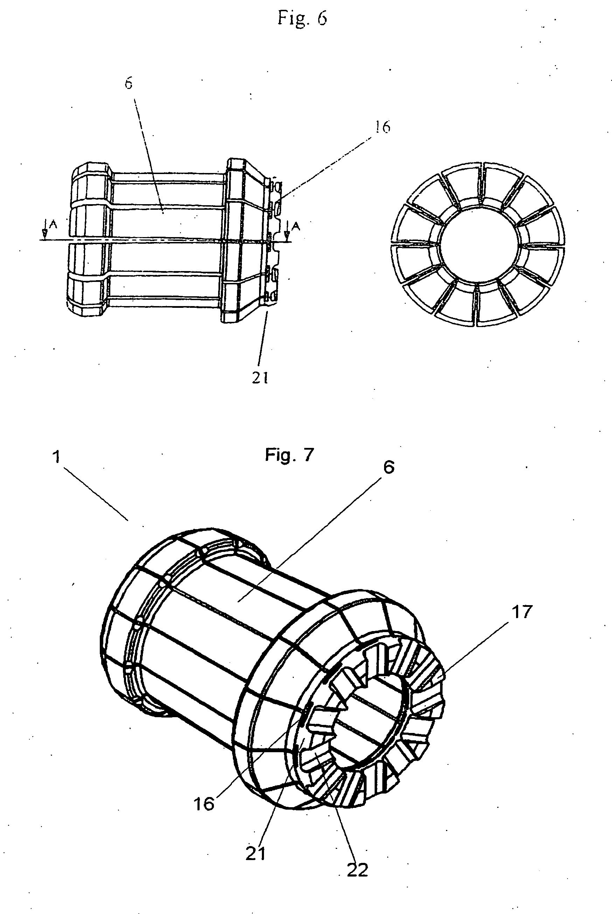

Fig. 5 bis 7 zeigen die Spannzange (1) im gespannten Zustand und deren dazugehöriges Gelenk (5). Die Fig. 5 zeigt in vergrößerter Darstellung ein Gelenk (5), welches sich im gespannten Zustand befindet. Die Spannzange (1) besitzt im hinteren Teil sog. Kammern (16), um den Spannsegmenten (6) eine Tellerfedereigenschaft zu verleihen. Die Kammern (16) am hinteren Ende der Spannzange sind im Winkel zueinander gleichmäßig verteilt, welche durch Befestigungsstege (17) und einer Materialfläche (22) gebildet werden, wobei die Befestigungsstege (17) auf dem endseitigen Ring (21) eine dreieckige Form (17) besitzen, die zum Zentrum hin spitz zulaufen, um so den Effekt eines gleichen Mantelquerschnitts (22) und somit eine gleiche Spannungsverteilung zu erhalten.

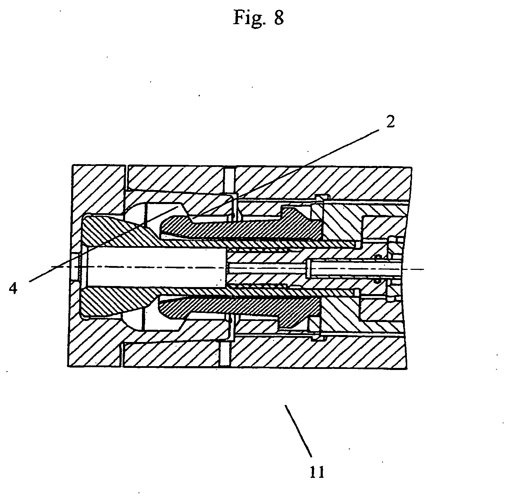

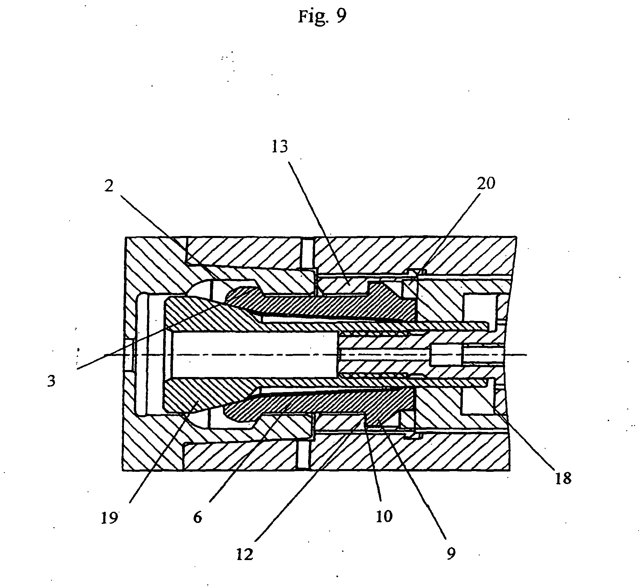

Fig. 8 und Fig. 9 zeigen eine Kupplungsvorrichtung, in der sich die Spannzange befindet.
Fig. 8 zeigt die Spannzange in der Kupplungsvorrichtung im gelösten Zustand, und Fig. 9 zeigt die Spannzange in der Kupplungsvorrichtung im gespannten Zustand. In Fig. 8 befindet sich der Ringbund (2) unterhalb der Ausnehmungen (4) im Hohlschaftkegel. Während der Bewegung der Zugstange in Richtung der Spannzange drückt der Kopf (19) der Zugstange (18) die Spannsegmente (6) nach außen und drückt die keilförmige Ringfläche (8) am Ringbund (2) in die Greifschulter (4) im Hohlschaftkegel, wie in Fig. 9 dargestellt. Während der Bewegung erfahren die Spannsegmente (6) eine radiale Bewegung, wobei der Kraftfluss ausgehend von der Anpresskraft der keilförmigen Ringfläche (3) am Ringbund (2) über die Kupplungsvorrichtung und über die radiale Fläche (10) am Einhängebund (9) erfolgt. Die Spannzange (1) erfährt in der Kupplungsvorrichtung (11) ihre notwendige Abstützung durch die Zugstange (18) und der äußeren Abstützung (20).

Aufgabe der Erfindung ist es, eine monolithische Spannzange zu schaffen, die aus einem Stück besteht und deren Aufgabe es ist, nicht wie bei der EP 0782896 die Spannkraft weiterzuleiten, sondern ausgehend vom Zugkolben die Spannkraft zu verstärken.

## Patentansprüche

1. Kupplungsvorrichtung zum Kuppeln eines Hohlschaftkegels mit einer werkzeugmaschinenseitig vorgesehenen Aufnahme, mit einer Spannzange (1), die einzelne Spannsegmente (6) und an einem Ende am äußeren Umfang einen Ringbund (2) mit einer keilförmigen Ringfläche (3) aufweist, mit einer Zugstange (18) mit einem eine radiale Erhöhung aufweisenden Kopf (19), der zum Spannen in Richtung der einzelnen Spannsegmente (6) drückt, wobei die Spannsegmente (6) radial nach außen in den Hohlschaft des Hohlschaftkegels ausgelenkt werden,
**dadurch gekennzeichnet,**
**dass** die Spannzange (1) am anderen, dem Ringbund (2) gegenüberliegenden Ende einen Einhängebund (9) mit radialer Fläche (10) aufweist, die auf eine feste axiale Abstützung (12) eines Teils (13) der Aufnahme drückt, und dass die Spannzange aus einem Stuck gebildet ist und mit einem endseitigen Ring (21) am hinteren Teil versehen ist, mit dem die Spannzange (1) innen an der Zugstange (18) und außen an einer äußeren Abstützung (20) schwenkbar abgestützt ist, wobei sich an den Ring (21) ein dünnwandiger Mantelabschnitt der Spannsegmente (6) anschließt, der ein Gelenk (5) bildet.

2. Kupplungsvorrichtung nach Anspruch 1,
**dadurch gekennzeichnet,**
**dass** eine radiale Auslenkung der Spannsegmente (6) unter Inanspruchnahme der Gelenke (5) am hinteren Teil der Spannzange (1) erfolgt.

3. Kupplungsvorrichtung nach Anspruch 1 oder 2,
**dadurch gekennzeichnet,**
**dass** die Spannsegmente (6) am hinteren Teil der Spannzange (1) Kammern (16) aufweisen, um den Spannsegmenten (6) eine Tellerfedereigenschaft zu verleihen.

4. Kupplungsvorrichtung nach Anspruch 3,
**dadurch gekennzeichnet,**
**dass** die Kammern (16) in Umfangsrichtung verlaufende Schlitze sind, die in radialer Richtung offen sind.

5. Kupplungsvorrichtung nach Anspruch 3 oder 4,
**dadurch gekennzeichnet,**
**dass** die Kammern (16) im Winkel zueinander gleichmäßig verteilt sind.

6. Kupplungsvorrichtung nach einem der Ansprüche 3 bis 5,
**dadurch gekennzeichnet,**
**dass** die Kammern (16) zwischen einzelnen dünnwandigen Mantelflächen (22) und den Spannsegmenten (6) gebildet sind.

7. Kupplungsvorrichtung nach einem der Ansprüche 3 bis 6,
**dadurch gekennzeichnet,**
**dass** zwei benachbarte Spannsegmente (6) eine beiden gemeinsame Kammer (16) aufweisen.

## Claims

1. Coupling device for coupling a hollow shank taper to a receptacle provided on the machine-tool side, comprising a collet (1) which has individual clamping segments (6) and, on one end at the outer circumference, an annular collar (2) having a wedge-shaped annular surface (3), comprising a drawbar (18) having a head (19) which has a radial prominence and which presses in the direction of the individual clamping segments (6) for the clamping, wherein the clamping segments (6) are deflected radially outwards into the hollow shank of the hollow shank taper, **characterized in that** the collet (1) has, at the other end opposite the annular collar (2), a suspension collar (9) having a radial surface (10) which presses on a fixed axial support (12) of a part (13) of the receptacle, and **in that** the collet is formed from one piece and is provided with an end ring (21) on the rear part, with which the collet (1) is pivotably supported on the inside on the drawbar (18) and on the outside on an outer support (20), wherein a thin-walled envelope section of the clamping segments (6) adjoins the ring (21), said envelope section forming an articulation (5).

2. Coupling device according to Claim 1, **characterized in that** a radial deflection of the clamping segments (6) is effected while utilizing the articulations (5) on the rear part of the collet (1).

3. Coupling device according to Claim 1 or 2, **characterized in that** the clamping segments (6) on the rear part of the collet (1) have chambers (16) in order to provide the clamping segments (6) with a disc spring property.

4. Coupling device according to Claim 3, **characterized in that** the chambers (16) are slots which run in the circumferential direction and which are open in the radial direction.

5. Coupling device according to Claim 3 or 4, **characterized in that** the chambers (16) are uniformly distributed at an angle to one another.

6. Coupling device according to one of Claims 3 to 5, **characterized in that** the chambers (16) are formed between individual thin-walled envelope surfaces (22) and the clamping segments (6).

7. Coupling device according to one of Claims 3 to 6, **characterized in that** two adjacent clamping segments (6) have a chamber (16) common to both.

## Revendications

1. Dispositif d'accouplement pour l'accouplement d'une tige creuse conique avec un logement prévu du côté de la machine-outil, avec une pince de serrage (1) qui présente des segments de serrage individuels (6) et un épaulement annulaire (2) avec une surface annulaire (3) de forme conique à une extrémité sur la périphérie extérieure, avec une tige de traction (18) avec une tête (19) présentant un rehaussement radial, qui presse par serrage dans la direction des segments de serrage individuels (6), les segments de serrage (6) étant articulés radialement vers l'extérieur dans la tige creuse conique,
**caractérisé en ce que**
la pince de serrage (1) présente, à l'autre extrémité opposée à l'épaulement annulaire (2), un épaulement d'accrochage (9) avec une surface radiale (10), qui presse sur un support fixe axial (12) d'une partie (13) du logement, et **en ce que** la pince de serrage est formée d'une seule pièce et est pourvue d'une bague (21) du côté de l'extrémité au niveau de la partie arrière, avec laquelle la pince de serrage (1) est supportée de manière pivotante à l'intérieur contre la tige de traction (18) et à l'extérieur contre un support extérieur (20), une portion d'enveloppe à paroi mince des segments de serrage (6) se raccordant à la bague (21), laquelle forme une articulation (5).

2. Dispositif d'accouplement selon la revendication 1,
**caractérisé en ce**
**qu'**une déviation radiale des segments de serrage (6) a lieu en tenant compte de l'articulation (5) à la partie arrière de la pince de serrage (1).

3. Dispositif d'accouplement selon la revendication 1 ou 2,
**caractérisé en ce que**
les segments de serrage (6) présentent à la partie arrière de la pince de serrage (1) des chambres (16), afin de conférer aux segments de serrage (6) une propriété de ressort Belleville.

4. Dispositif d'accouplement selon la revendication 3,
**caractérisé en ce que**
les chambres (16) sont des fentes s'étendant dans la direction périphérique, qui sont ouvertes dans la direction radiale.

5. Dispositif d'accouplement selon la revendications 3 ou 4,
**caractérisé en ce que**
les chambres (16) sont réparties uniformément suivant un certain angle les unes par rapport aux autres.

6. Dispositif d'accouplement selon l'une quelconque des revendications 3 à 5,
**caractérisé en ce que**
les chambres (16) sont formées entre des surfaces d'enveloppe individuelles à paroi mince (22) et les segments de serrage (6).

7. Dispositif d'accouplement selon l'une quelconque des revendications 3 à 6,
**caractérisé en ce que**
deux segments de serrage adjacents (6) présentent une chambre (16) commune aux deux.
